# EUROPÄISCHE PATENTSCHRIFT

(11) **EP 2 165 083 B1**
(45) Veröffentlichungstag und Bekanntmachung des Hinweises auf die Patenterteilung: **06.07.2011**
(21) Anmeldenummer: 08748981.1
(22) Anmeldetag: 18.04.2008
(51) Int. Cl.: F16C 9/06

(54) **ZWEIROHRSTOSSDÄMPFER**
TWIN-TUBE SHOCK ABSORBER
AMORTISSEUR BITUBE

(30) Priorität: 11.07.2007 DE 102007032314
(43) Veröffentlichungstag der Anmeldung: 24.03.2010
(73) Patentinhaber: Audi AG, 85045 Ingolstadt (DE)
(72) Erfinder: MICHEL, Wilfried, 93339 Riedenburg (DE)
(74) Vertreter: Asch, Konrad
(86) Internationale Anmeldenummer: PCT/EP2008/003121
(87) Internationale Veröffentlichungsnummer: WO 2009/006953

(56) Entgegenhaltungen:
- DE-A1- 2 257 556
- DE-A1- 2 308 413
- DE-A1- 2 419 833
- DE-A1- 2 545 563
- DE-A1-102004 032 472
- FR-A- 1 499 823

## Beschreibung

Die Erfindung betrifft einen Zweirohrstoßdämpfer, insbesondere für ein Kraftfahrzeug, gemäß der im Oberbegriff des Anspruches 1 angegebenen Art.

Derartige Zweirohrstoßdämpfer sind aus dem Stand der Technik hinreichend bekannt, vgl. DE 10 2004 032 472 A1 und DE 2 257 556.

Bekanntlich formen beim Zweirohrstoßdämpfer der Arbeitszylinder und das Behälterrohr zwei Räume: Den Arbeitsraum innerhalb des Arbeitszylinders, in dem sich der Kolben und die Kolbenstange bewegen, und den ringförmigen Ölvorratsraum zwischen Arbeitszylinder und Behälterrohr, der dazu dient, die durch die Bewegungen der Kolbenstange verursachten Ölvolumenänderungen im Arbeitsraum auszugleichen. Der Ölvorratsraum ist zu einem Teil mit Mineralöl und zum anderen mit Luft gefüllt, die unter einem Druck von sechs bis acht Bar steht. Beim Ein- und Ausfahren der Kolbenstange erhöht bzw. vermindert sich der Gasdruck im Ölvorratsraum entsprechend dem ausgetauschten Ölvolumen. Zur Dämpfung werden zwei Dämpfungsventile eingesetzt: Das Kolben- und das Bodenventil. Federt das Fahrzeug aus, so übernimmt das Kolbenventil allein die Dämpfung. Das Ventil setzt dem aus dem Raum oberhalb des Kolbens nach unten strömenden Öl Widerstand entgegen. Die Aufwärtsbewegung des Kolbens wird abgebremst. Über ein offenes Rückschlagventil im Boden-ventil kann das im Arbeitsraum benötigte Öl ungehindert aus dem Vorratsraum zufließen. Federt das Fahrzeug ein, so wird die Dämpfung vom Bodenventil zu einem Teil auch von den Durchflusswiderständen des Kolbens in Druckrichtung bestimmt. Das durch die einfahrende Kolbenstange verdrängte Öl strömt in den Vorratsraum. Das Bodenventil setzt dieser Strömung Widerstand entgegen und bremst somit die Bewegung ab, siehe "Die Bibliothek der Technik", Bd. 185, Kraftfahrzeugstoßdämpfer, Peter Causemann, Verlag Moderne Industrie, Seite 19/20.

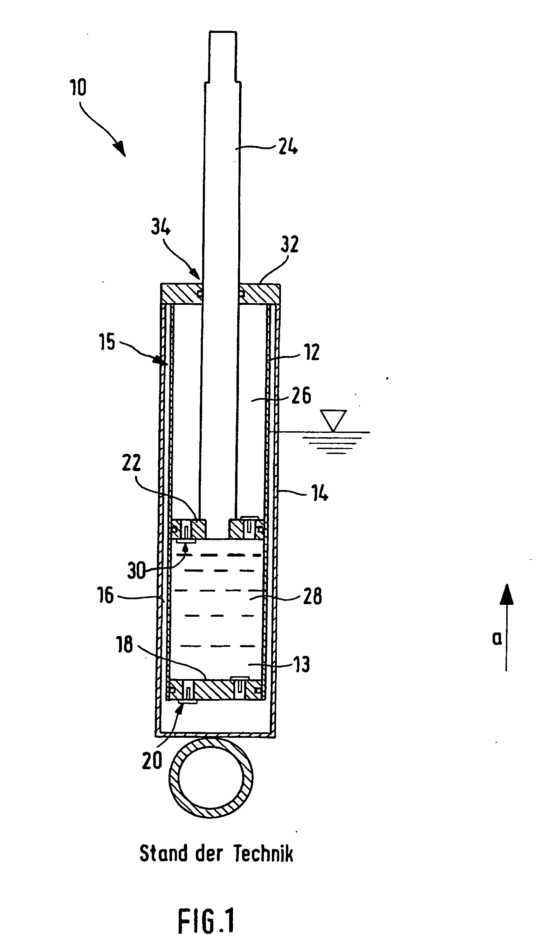

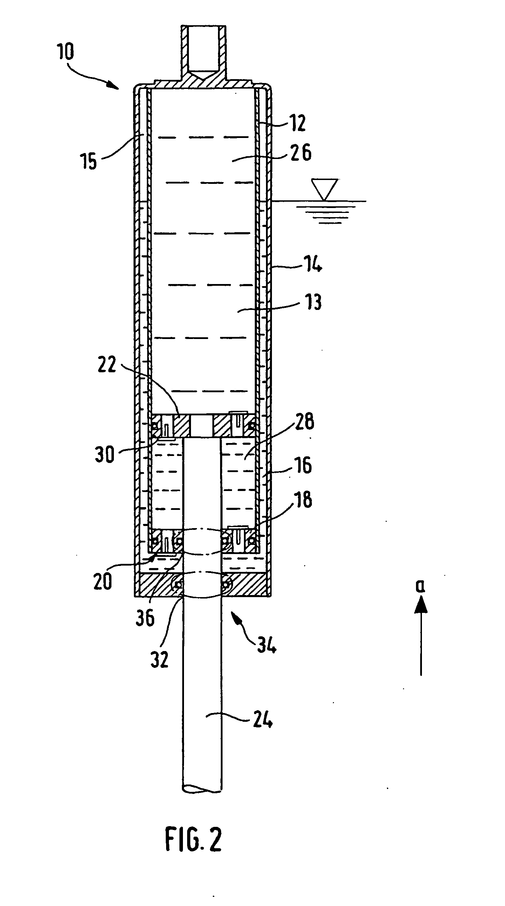

Als nachteilig erweist sich hierbei insbesondere der Umstand, dass die bekannten Zweirohrstoßdämpfer aufgrund des oszillierenden Behälterrohrs eine verhältnismäßig große ungefederte Masse aufweisen. Einen aus dem Stand der Technik bekannten Zweirohrstoßdämpfer einfach "auf den Kopf" zu stellen, um obigen Nachteil zu vermeiden, ist technisch nicht möglich, da in diesem Falle das Bodenventil nicht mehr unter dem Ölspiegel liegen würde, d.h. die Funktionsfähigkeit des auf den Kopf stehenden Zweirohrstoßdämpfers wäre nicht mehr gegeben. Folglich ist es mit dem bekannten Zweirohrstoßdämpfer auch nicht möglich, wenn z. B. packagemäßig oder funktional die Anforderung besteht, dass sich das Behälterrohr in relativer Ruhe befinden soll und die Kolbenstange oszilliert, dies technisch umzusetzen. Aus der DE 25 45 563 ist weiterhin ein hydraulischer Dämpfer für eine Fahrzeugfederung bekannt. Wie insbesondere aus Fig. 1 und Fig. 2 ersichtlich ist, kann bei dem offenbarten hydraulischen Dämpfer in Einbanlage die Kolbenstange auch unterhalb des Dämpfers angeordnet sein.

Der Erfindung liegt die Aufgabe zugrunde, einen Zweirohrstoßdämpfer gemäß der im Oberbegriff des Anspruches 1 angegebenen Art unter Vermeidung der genannten Nachteile derart weiterzubilden, dass der Zweirohrstoßdämpfer geringere ungefederte Massen aufweist.

Diese Aufgabe wird durch die kennzeichnenden Merkmale des Anspruches 1 in Verbindung mit seinen Oberbegriffsmerkmalen gelöst.

Der Unteranspruch 2 bildet eine vorteilhafte Weiterbildung der Erfindung.

Entsprechend den aus dem Stand der Technik bekannten Zweirohrstoßdämpfern weist der Zweirohrstoßdämpfer gemäß der Erfindung einen mit einer Dämpferflüssigkeit gefüllten Arbeitszylinder und ein den Arbeitszylinder konzentrisch umfassendes Behälterrohr auf. Zwischen dem Arbeitszylinder und dem Behälterrohr ist ein mit Dämpferflüssigkeit und einem Gas gefüllter Vorratsraum ausgebildet. Der Arbeitszylinder ist mittels einer Bodenplatte gegenüber dem Vorratsraum abgeschlossen. Über mindestens ein in der Bodenplatte vorgesehenes Bodenventil steht der Arbeitszylinder mit dem Vorratsraum in Wirkverbindung. Zudem weist der Zweirohrstoßdämpfer in bekannter Art und Weise einen, den Arbeitszylinder in zwei Arbeitskammern unterteilenden Kolben mit mindestens einem Kolbenventil auf. Die Kolbenstange des Kolbens ist über eine am kolbenstangenaustrittsseitigen Ende des Zweirohrstoßdämpfers angeordnete Kolbenstangenführung geführt. Erfindungsgemäß ist vorgesehen, dass sich die Kolbenstange in axialer Richtung betrachtet bzw. in Einbaulage unterhalb des Zweirohrstoßdämpfers befindet. Hierzu weist die Bodenplatte einen Durchbruch auf, durch den die Kolbenstange flüssigkeitsdicht geführt ist und in axialer Richtung betrachtet ist die Kolbenstangenführung und das kolbenstangenaustrittsseitige Ende des Zweirohrstoßdämpfers unterhalb der Bodenplatte angeordnet.

Aufgrund der erfindungsgemäßen Maßnahmen ist erstmals ein Zweirohrstoßdämpfer zur Verfügung gestellt, bei dem die Kolbenstange in axiale Richtung bzw. in Einbaulage betrachtet unterhalb des eigentlichen Dämpferkörpers angeordnet ist. Der große Vorteil dieser Anordnung besteht darin, dass sich nunmehr der im Verhältnis zur Kolbenstange eine große Masse aufweisende Dämpferkörper, also der Arbeitszylinder und das Behälterrohr, in relativer Ruhe befindet und nur die Kolbenstange oszilliert. Somit weist der erfindungsgemäße Zweirohrstoßdämpfer im Vergleich zu den bekannten Dämpfern geringere ungefederte Massen auf. Durch die erfindungsgemäßen Maßnahmen ist zudem sichergestellt, dass sich die Bodenplatte bzw. das Bodenventil unter dem Ölspiegel liegt, also die volle Funktionsfähigkeit des Zweirohrstoßdämpfers gewährleistet ist.

Mit dem erfindungsgemäßen Zweirohrstoßdämpfer ist es nunmehr auch möglich, die z.B. packagemäßig oder funktional bedingte Anforderung, dass sich das Behälterrohr in relativer Ruhe befinden und nur die Kolbenstange oszillieren soll, technisch umzusetzen. Folglich kann in vorteilhafter Weise das in Ruhe befindliche Behälterrohr auch als Stützelement für ein weiteres Maschinenelement dienen bzw. genutzt werden.

Vorzugsweise weist der Durchbruch in der Bodenplatte eine Ringnut auf. In vorteilhafter Weise ist somit eine Möglichkeit für eine platzsparende Anordnung einer Dichtung zur Verfügung gestellt, um die flüssigkeitsdichten Hindurchführung der Kolbenstange durch die Bodenplatte zu ermöglichen.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird im Folgenden an Hand des in der Zeichnung dargestellten Ausführungsbeispiels näher beschrieben.

In der Beschreibung, in den Patentansprüchen, in der Zusammenfassung und in den Zeichnungen werden die in der unten aufgeführten Liste der Bezugszeichen verwendeten Begriffe und zugeordnete Bezugszeichen verwendet. In der Zeichnung bedeuten:
- Fig. 1: eine schematische Darstellung eines Zweirohrstoßdämpfers nach dem Stand der Technik,
- Fig. 2: eine schematische Darstellung eines erfindungsgemäßen Zwei- rohrstoßdämpfers,
- Fig. 3: der Zweirohrstoßdämpfer gemäß Fig. 2 in der Zugstufe, und
- Fig. 4: der Zweirohrstoßdämpfer gemäß Fig. 2 in der Druckstufe.

In der nachfolgenden Beschreibung und den Figuren werden zur Vermeidung von Wiederholungen gleiche Bauteile und Komponenten mit gleichen Bezugszeichen gekennzeichnet, sofern keine weitere Differenzierung erforderlich oder sinnvoll ist.

Fig. 1 zeigt mehr oder minder schematisch einen insgesamt mit der Bezugsziffer 10 bezeichneten Zweirohrstoßdämpfer nach dem Stand der Technik.

Der Zweirohrstoßdämpfer 10 umfasst einen Arbeitszylinder 12, der mit einer Dämpferflüssigkeit 13 gefüllt ist. Der Arbeitszylinder 12 ist von einem Behälterrohr 14 konzentrisch umschlossen. Zwischen dem Arbeitszylinder 12 und dem Behälterrohr 14 ist ein Vorratsraum 16 ausgebildet, der mit Dämpferflüssigkeit 13 und mit einem unter Druck stehendem Gas 15, wie z. B. Luft, gefüllt ist. Über eine Bodenplatte 18 ist der Arbeitszylinder 12 gegenüber dem Vorratsraum 16 abgeschlossen. Die Bodenplatte 18 weist zwei Bodenventile 20 auf, über die der Arbeitszylinder 12 mit dem Vorratsraum 16 in Wirkverbindung steht. Zudem ist in dem Arbeitszylinder 12 ein Kolben 22 geführt, der mit einer Kolbenstange 24 verbunden ist und den Arbeitszylinder 12 in zwei Arbeitskammern 26, 28 unterteilt. Der Kolben 22 weist seinerseits zwei Kolbenventile 30 auf, über die die beiden Arbeitskammern 26, 28 des Arbeitszylinders 12 in Wirkverbindung stehen. Die Kolbenstange 24 ist in einer Kolbenstangenführung 32 geführt. Die Kolbenstangenführung 32 ist in axialer Richtung (a) bzw. in Einbaulage betrachtet oben angeordnet, d. h. das kolbenstangenaustrittsseitige Ende 34 des Zweirohrstoßdämpfers ist ebenfalls oben angeordnet.

Als nachteilig erweist sich bei dem Zweirohrstoßdämpfer 10 gemäß dem Stand der Technik der Umstand, dass dieser relativ große ungefederte Massen aufweist.

Der in Fig. 2 dargestellte erfindungsgemäße Zweirohrstoßdämpfer 10 vermeidet die oben genannten Nachteile nach dem Stand der Technik.

Im Gegensatz zu dem bekannten Zweirohrstoßdämpfer 10 weist die Bodenplatte 18 einen Durchbruch 36 auf, durch den die Kolbenstange 24 flüssigkeitsdicht geführt ist. Somit ist in axialer Richtung (a) bzw. in Einbaulage betrachtet die Kolbenstangenführung 32 und das kolbenstangenaustrittsseitige Ende 34 des Zweirohrstoßdämpfers 10 unterhalb der Bodenplatte 18 angeordnet. D.h. bei dem erfindungsgemäßen Zweirohrstoßdämpfer 10 befindet sich die Kolbenstange 24 in Einbaulage unterhalb des eigentlichen Dämpferkörpers 12, 14.

Hierdurch ist sichergestellt, dass der erfindungsgemäße Zweirohrstoßdämpfer 10 im Vergleich zu den bisher bekannten Dämpfern geringere ungefederte Massen aufweist, da durch den nunmehr ermöglichten "auf den Kopf gestellten" Einbau, nämlich Kolbenstange 24 unterhalb des eigentlichen Dämpferkörpers 12, 14, im Wesentlichen lediglich die Kolbenstange als ungefederte Masse wirkt.

Da sich das Behälterrohr 14 in Ruhe befindet, kann dieses nunmehr auch als Lagerfläche bzw. Stützelement für ein weiteres Maschinenelement genutzt werden.

Die Funktionsweise des erfindungsgemäßen Zweirohrstoßdämpfers 10 entspricht dabei der Funktionsweise eines konventionellen Zweirohrstoßdämpfers.

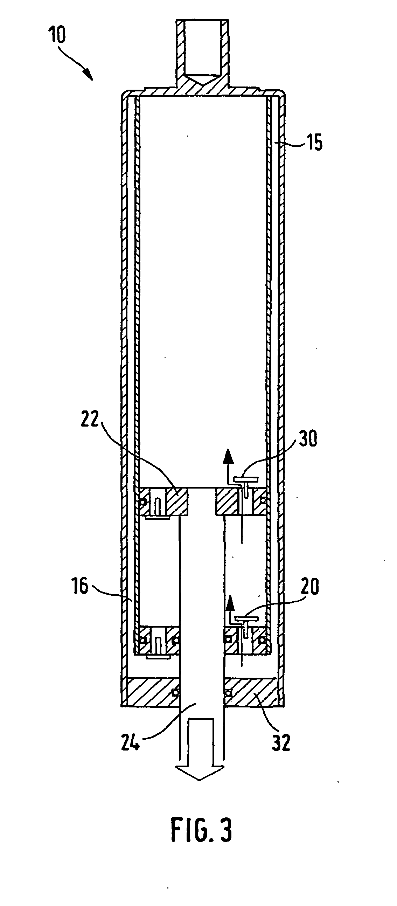

In der Zugstufe, vgl. Fig. 3, erfolgt eine Drosselung über das Kolbenventil 30 und ein Nachsaugen über das Bodenventil 20, d.h. das Volumen des aus der Arbeitskammer 26 ausfahrenden Kolbenstangenvolumens wird nachgesaugt.

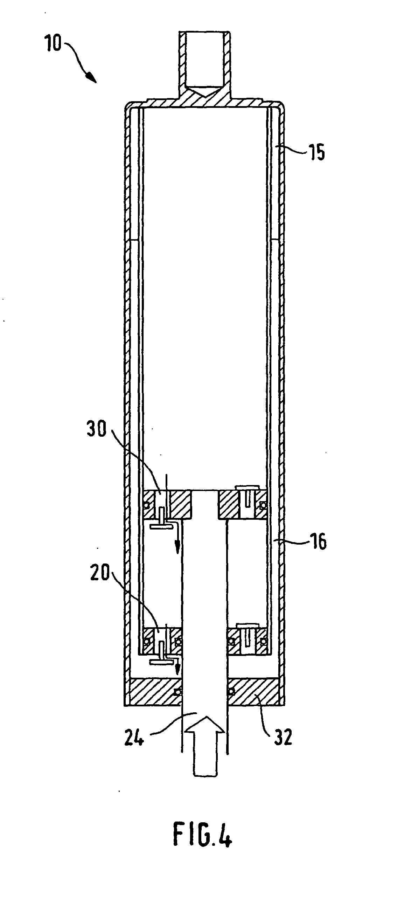

In der Druckstufe, vgl. Fig. 4 erfolgt eine Drosselung über das Kolbenventil 30 und ein Ausschieben über ein Bodenventil 20, d.h. das Volumen des in die Arbeitskammer 26 einfahrenden Kolbenstangenvolumens wird in den Vorratsraum 16 geschoben.

### BEZUGSZEICHENLISTE

- 10: Zweirohrstoßdämpfer
- 12: Arbeitszylinder
- 13: Dämpferflüssigkeit
- 14: Behälterrohr
- 15: Gas
- 16: Vorratsraum
- 18: Bodenplatte
- 20: Bodenventil
- 22: Kolben
- 24: Kolbenstange
- 26: Arbeitsraum
- 28: Arbeitsraum
- 30: Kolbenventil
- 32: Kolbenstangenführung
- 34: Kolbenstangenaustrittsseitiges Ende
- 36: Durchbruch

- a: axiale Richtung

## Patentansprüche

1. Zweirohrstoßdämpfer (10), insbesondere für ein Kraftfahrzeug, umfassend,
- einen Arbeitszylinder (12), der mit eine Dämpferflüssigkeit (13) gefüllt ist,
- ein Behälterrohr (14), das den Arbeitszylinder (12) konzentrisch umschließt,
- ein Vorratsraum (16), der zwischen dem Arbeitszylinder (12) und dem Behälterrohr (14) ausgebildet ist und mit der Dämpferflüssigkeit (13) und einem Gas (15) gefüllt ist,
- eine Bodenplatte (18), die den Arbeitszylinder (12) gegenüber dem Vorratsraum (16) abschließt, wobei die Bodenplatte (18) mindestens ein Bodenventil (20) aufweist, über das beim Einfedern ein Nachfließen von Dämpferflüssigkeit (13) aus dem Vorratsraum (16) in den Arbeitszylinder (12) und über das beim Ausfedern eine Verdrängung von Dämpferflüssigkeit (13) aus dem Arbeitszylinder (12) in den Vorratsraum (16) erfolgt,
- einen Kolben (22), der mit einer Kolbenstange (24) verbunden ist und mindestens ein Kolbenventil (30) aufweist, und den Arbeitszylinder (12) in zwei Arbeitskammern (26, 28) unterteilt, sowie
- einer am kolbenstangenaustrittsseitigen Ende (34) des Zweirohrstoßdämpfers (10) angeordneten Kolbenstangenführung (32),
**dadurch gekennzeichnet, dass** die Bodenplatte (18) einen Durchbruch (36) aufweist, durch den die Kolbenstange (24) flüssigkeitsdicht geführt ist und dass in axialer Richtung (a) betrachtet die Kolbenstangenführung (32) und das kolbenstangenaustrittsseitige Ende (34) des Zweirohrstoßdämpfers (10) unterhalb der Bodenplatte (18) angeordnet sind.

2. Zweirohrstoßdämpfer nach Patentanspruch 1, **dadurch gekennzeichnet, dass** der Durchbruch (36) in der Bodenplatte (18) eine Ringnut aufweist.

## Claims

1. Twin-tube shock-absorbing damper (10), in particular for a motor vehicle, comprising
- a working cylinder (12) which is filled with a damper liquid (13),
- a container tube (14) which concentrically surrounds the working cylinder (12),
- a storage chamber (16) which is formed between the working cylinder (12) and the container tube (14) and which is filled with the damper liquid (13) and a gas (15),
- a base plate (18) which closes off the working cylinder (12) with respect to the storage chamber (16), the base plate (18) having at least one base valve (20) via which a replenishing flow of damper liquid (13) takes place from the storage chamber (16) into the working cylinder (12) during a compression movement and via which a displacement of damper liquid (13) takes place from the working cylinder (12) into the storage chamber (16) during a rebound movement,
- a piston (22) which is connected to a piston rod (24) and which has at least one piston valve (30) and which divides the working cylinder (12) into two working chambers (26, 28), and
- a piston rod guide (32) which is arranged on the piston-rod-outlet-side end (34) of the twin-tube shock-absorbing damper (10),
**characterized in that** the base plate (18) has an aperture (36) through which the piston rod (24) is guided in a liquid-tight manner, and **in that** the piston rod guide (32) and the piston-rod-outlet-side end (34) of the twin-tube shock-absorbing damper (10) are arranged below the base plate (18) as viewed in the axial direction (a).

2. Twin-tube shock-absorbing damper according to Patent Claim 1, **characterized in that** the aperture (36) in the base plate (18) has an annular groove.

## Revendications

1. Amortisseur bitube (10), notamment pour un véhicule automobile, comprenant :
- un cylindre de travail (12), qui est rempli d'un liquide d'amortissement (13),
- un tube conteneur (14) qui entoure concentriquement le cylindre de travail (12),
- un espace de stockage (16) qui est réalisé entre le cylindre de travail (12) et le tube conteneur (14) et qui est rempli avec le liquide d'amortissement (13) et un gaz (15),
- une plaque de fond (18) qui ferme le cylindre de travail (12) par rapport à l'espace de stockage (16), la plaque de fond (18) présentant au moins une soupape de fond (20), par le biais de laquelle, lors de la compression du ressort, un refoulement de liquide d'amortissement (13) a lieu hors de l'espace de stockage (16) dans le cylindre de travail (12) et par le biais de laquelle, lors du débattement du ressort, un déplacement de liquide d'amortissement (13) a lieu hors du cylindre de travail (12) dans l'espace de stockage (16),
- un piston (22), qui est connecté à une tige de piston (24) et qui présente au moins une soupape de piston (30) et qui divise le cylindre de travail (12) en deux chambres de travail (26, 28), et
- un guide de tige de piston (32) disposé à l'extrémité (34) de l'amortisseur bitube (10) située du côté de la sortie de la tige de piston,
**caractérisé en ce que** la plaque de fond (18) présente un orifice (36), à travers lequel la tige de piston (24) est guidée de manière étanche aux liquides, et **en ce que**, vu dans la direction axiale (a), le guide de tige de piston (32) et l'extrémité (34) de l'amortisseur bitube (10) située du côté de la sortie de la tige de piston sont disposés sous la plaque de fond (18).

2. Amortisseur bitube selon la revendication 1, **caractérisé en ce que** l'orifice (36) dans la plaque de fond (18) présente une rainure annulaire.
